# EUROPÄISCHE PATENTSCHRIFT

(11) **EP 2 606 081 B1**
(45) Veröffentlichungstag und Bekanntmachung des Hinweises auf die Patenterteilung: **11.01.2017**
(21) Anmeldenummer: 11754995.6
(22) Anmeldetag: 19.08.2011
(51) Int. Cl.: C09J 163/00, E04F 15/02, C08G 65/336

(54) **WASSER-, LÖSEMITTEL- UND WEICHMACHER-FREIER SILANMODIFIZIERTER EINKOMPONENTEN-PARKETTKLEBSTOFF UND DESSEN VERWENDUNG ZUR VERKLEBUNG VON PARKETT, HOLZBODENBELÄGEN UND HOLZWERKSTOFFPLATTEN MIT ALLEN IM INNENAUSBAU ÜBLICHEN, AUCH PROBLEMATISCHEN UNTERGRÜNDEN**
WATER-, SOLVENT- AND PLASTICIZER-FREE, SILANE-MODIFIED, ONE-COMPONENT PARQUET ADHESIVE AND USE THEREOF FOR BONDING PARQUET, WOOD FLOOR COVERINGS AND WOOD-BASED MATERIAL BOARDS TO ALL - INCLUDING PROBLEM - SUBSTRATES CUSTOMARY IN INTERIOR FITMENT
COLLE À PARQUET À UN COMPOSANT, MODIFIÉE AU SILANE ET EXEMPTE D'EAU, DE SOLVANT ET DE PLASTIFIANT, ET UTILISATION DE CELLE-CI POUR COLLER DU PARQUET, DES REVÊTEMENTS DE SOL EN BOIS ET DES PANNEAUX À BASE DE BOIS, AVEC TOUTES SORTES DE SUPPORTS COURANTS EN AMÉNAGEMENT INTÉRIEUR, MÊME PROBLÉMATIQUES

(30) Priorität: 20.08.2010 DE 102010034998
(43) Veröffentlichungstag der Anmeldung: 26.06.2013
(73) Patentinhaber: Stauf Klebstoffwerk GmbH, 57234 Wilnsdorf (DE)
(72) Erfinder: GAHLMANN, Frank, 57271 Hilchenbach (DE)
(74) Vertreter: Pfenning, Meinig & Partner mbB
(86) Internationale Anmeldenummer: PCT/EP2011/004196
(87) Internationale Veröffentlichungsnummer: WO 2012/022493

(56) Entgegenhaltungen:
- EP-A1- 2 011 833
- WO-A1-2007/093381
- WO-A1-2010/035820
- WO-A1-2010/063740
- WO-A2-2010/008154
- "DURCAL 40 Marmormehl für Glasschleier", reinline KG,Oststeinbek , 2011, XP002668065, Gefunden im Internet: URL:http://www.reinline.de/index.php?page= shop.product_details&flypage=flypage.tpl&p roduct_id=460&category_id=32&vmcchk=1&opti on=com_virtuemart&Itemid=53 [gefunden am 2012-01-26]
- CADLE R ED - CADLE R: "Selection of Method of Particle Size Determination", 1. Januar 1955 (1955-01-01), PARTICLE SIZE DETERMINATION, INTERSCIENCE PUBLISHERS, US, PAGE(S) 92 - 101, XP007919094, Seite 93; Tabelle II Seite 98, Zeile 3 - Zeile 4 Seite 101, Zeile 4 - Zeile 6

## Beschreibung

Die vorliegende Erfindung betrifft einen einkomponentigen, silanmodifizierten, Wasser-, Lösemittel- und Weichmacher-freien Parkettklebstoff sowie dessen Verwendung zur Verklebung von Parkett, Holzbodenbelägen und Holzwerkstoffplatten mit allen im Innenausbau üblichen, auch problematischen Untergründen.

Parkettklebstoffe auf Basis silanmodifizierter oligomerer Verbindungen haben typischerweise den Vorteil verarbeitungs- und anwendungsfreundlich sowie frei von Wasser, Lösemitteln und gesundheitsgefährdenden Substanzen wie Isocyanaten zu sein, jedoch den Nachteil mit migrationsfähigen Bestandteilen wie Weichmachern und/oder nicht-reaktiven Flüssig-Extendern formuliert zu sein. Die Löseeigenschaften dieser Zusätze bedingen auf dafür anfälligen Untergründen wie Gussasphalt deutliche Einschränkungen der Haftung. Zudem können sie bei entsprechend anfälligen Holzbodenoberflächenbehandlungsmitteln wie Acrylat- oder Polyurethan-Parkettwasserlacken ein An- und Auflösen im Fugenbereich zwischen zwei Holzbodenelementen bewirken. Der erfindungsgemäße Parkettklebstoff überwindet diese Probleme durch seine spezielle, in Patentanspruch 1 beschriebene Zusammensetzung auf Basis mindestens zweier silanterminierter feuchtigkeitsreaktiver Polyalkylenoxid-Oligomerer mit mindestens zwei mineralischen Komponenten sowie geeignetem Härtungskatalysator, Trockenmittel und Haftvermittler. Bevorzugterweise ist zusätzlich mindestens ein UV-Licht-absorber, Antioxidationsmittel und rheologisches Additiv enthalten. Die terminalen Silangruppen der mindestens zwei Polyakylenoxid-Oligomere sind über Alkylgruppen mit dem oligomeren Grundgerüst verbunden. Die beiden Polyakylenoxid-Oligomere und die beiden mineralischen Komponenten liegen in definierten Mischungsverhältnissen vor und sind hinsichtlich Art, Struktur, Oberflächenbeschaffenheit und Molekulargewicht bzw. Partikelgröße charakterisiert. Trockenmittel und Haftvermittler enthalten feuchtigkeitsreaktive Silangruppen, vorzugsweise Trimethoxysilangruppen.

Der erfindungsgemäße Parkettklebstoff ist frei von Wasser, Lösemitteln, gesundheitsgefährdenden Substanzen, Weichmachern und nicht-reaktiven Flüssig-Extendern. Er besitzt die anwendungs- und verarbeitungsfreundlichen vorteilhaften Eigenschaften herkömmlicher silanmodifizierter Parkettklebstoffe. Zusätzlich weist er ausgezeichnete Haftungseigenschaften auf allen im Innenausbau üblichen, auch problematischen Untergründen auf. Holzbodenoberflächenbehandlungsmittel werden von ihm nicht angelöst oder angegriffen.

Die vorliegende Erfindung betrifft einen einkomponentigen, silanmodifizierten, Wasser-, Lösemittel- und Weichmacher-freien Parkettklebstoff sowie dessen Verwendung zur Verklebung von Parkett, Holzbodenbelägen und Holzwerkstoffplatten mit allen im Innenausbau üblichen, auch problematischen Untergründen.

Bei der Verklebung von Holzbodenbelägen, insbesondere Parkett, sind Klebstoffe gefragt, die eine einfache Handhabung und Verarbeitung ermöglichen, keine gesundheitlichen Risiken beinhalten, umweltverträglich sind, eine kraftschlüssige, feste Verbindung zwischen Belagholz und Untergrund gewährleisten, auf allen Untergründen gleichermaßen gut haften und keine Maßänderungen und/oder Schäden des Holzbodenbelags verursachen.

Diese Anforderungen werden von den zum Verkleben von Holzbodenelementen, insbesondere Parkett, üblicherweise eingesetzten Klebstoffen in jeweils unterschiedlichem Maße erfüllt. Im einzelnen lassen sie sich in folgende Klassen einteilen: Dispersionsklebstoffe, Lösemittelklebstoffe, Pulverklebstoffe, Methylendiisocyanat-(MDI)basierte Zweikomponenten-Polyurethanklebstoffe, MDI-basierte Einkomponenten-Polyurethanklebstoffe, Toluendiisocyanat-(TDI)basierte Polyurethanklebstoffe und silanmodifizierte polymere Klebstoffe (SMP-Klebstoffe).

Seit den fünfziger Jahren werden Dispersionsklebstoffe auf Basis von Vinylacetat-Homopolymer-Dispersionen zur Parkettklebung eingesetzt. Sie binden durch Verdunstung des Wassers ab, wobei die Klebung ausschließlich auf physikalischen Wechselwirkungen der Moleküle (Dipol-Dipol-, van der Waals-Wechselwirkungen) beruht. Nachteilig bei diesen bis heute eingesetzten Parkettklebstoffen ist der hohe Wassergehalt, der zu signifikanten Quellungen des Holzes und infolgedessen zu Maßänderungen des Parketts und anderer Holzbodenbeläge führen kann. Weiterhin unvorteilhaft ist die geringe Zeit, die zum Einlegen des Holzbodenbelagelements nach dem Auftrag des Klebstoffs auf den Untergrund bleibt (offene Zeit) sowie die teilweise nur mäßige Untergrundhaftung. Die hohe Glasübergangstemperatur der Vinylacetat-Homopolymere macht zudem den Einsatz von Koaleszensmitteln nötig, um eine Verfilmung der Dispersion bei der Verarbeitungstemperatur (Raumtemperatur) zu erreichen. Koaleszenzmittel sind flüchtige organische Verbindungen (VOCs), die auch nach der Parkettklebung noch über einen längeren Zeitraum an die Raumluft abgegeben werden und damit Umwelt- und Gesundheitsrisiken darstellen können.

Eine Weiterentwicklung der Dispersionsparkettklebstoffe auf Basis von Vinylacetat-Homopolymer-Dispersionen sind die Parkettklebstoffe auf Basis von Vinylacetat-Ethylen-Copolymer-Dispersionen. Bei diesen ähnlich formulierten Klebstoffen erfordert die niedrigere Glasübergangstemperatur der Copolymer-Dispersionen keine Koaleszenzmittel. Daneben werden heute auch spezielle Dispersionen auf Basis von Styrol-Acrylsäureester-Copolymeren eingesetzt. Diese Klebstoffe können aufgrund der niedrigen Glasübergangstemperatur der Dispersionen ebenfalls ohne Koaleszenzmittel formuliert werden. Nachteilig bleiben jedoch weiterhin die holzquellenden Eigenschaften, die geringen offen Zeiten (10 bis 20 Minuten) und die nur mäßig ausgeprägten Haftungseigenschaften.

Ende der sechziger Jahre wurden Lösemittel-Kunstharz-Parkettklebstoffe eingeführt. Diese Klebstoffe basieren auf Lösungen von Vinylacetat-Homopolymeren in einem Lösemittelgemisch, das Methanol, Ethanol, Methylacetat, Ethylacetat und Aceton enthalten kann. Sie binden durch Verdunstung des Lösemittels sehr schnell ab. Vorteilhaft bei diesen bis heute eingesetzten Parkettklebstoffen sind die im Vergleich zu Dispersions-Parkettklebstoffen um ca. 50 bis 70 % reduzierten holzquellenden Eigenschaften. Nachteilig ist jedoch der hohe Gehalt an Lösemitteln, deren Emission eine Belastung des Verarbeiters und der Umwelt bedeutet und demzufolge die Verwendung in Innenräumen limitiert ist. Die Produkte sind in der Regel als leichtentzündlich und gesundheitsschädlich oder reizend gekennzeichnet. Zudem sind die offenen Zeiten dieser Parkettklebstoffe besonders kurz (5 bis 10 Minuten) und somit nachteilig für den Verarbeitungsprozess. Die Haftungseigenschaften sind besser als die der Dispersionsklebstoffe.

Eine bezüglich der Lösemittelemissionen vorteilhafte Weiterentwicklung dieser Parkettklebstoffe findet sich in einem Patent der Stauf Klebstoffwerk GmbH (US 7,420,009 B2: LOW EMISSION ADHESIVE COMPOSITION BASED ON A SOLVENT).

Eine andere Weiterentwicklung der Dispersionsparkettklebstoffe sind pulverförmige Klebstoffformulierungen. Diese basieren auf reemulgierbaren Dispersionspulvern - in der Regel Vinylacetat-Ethylen-Copolymere. Sie enthalten eine mineralische Komponente, die Calciumsulfat-Hemihydrat, Portlandzement oder Aluminatzement enthalten kann. Bei diesen Klebstoffen handelt es sich um 2-Komponenten-Systeme, die aus Pulver und einer weiteren Komponente bestehen. Die zweite Komponente, die mit der Pulverkomponente gemischt wird, ist Wasser oder eine Polymerdispersion. Der Vorteil dieser Parkettklebstoffklasse ist die chemische Wasserbindung der mineralischen Komponente. Die unvorteilhafte Holzquellung der Dispersionsklebstoffe verringert sich dadurch auf ungefähr das Niveau der Lösemittel-Parkettklebstoffe. Nachteilig ist die begrenzte Topfzeit zwischen dem Mischen der Komponenten und dem Verarbeitungsende, in der die chemische Reaktion abläuft, die zunehmend eine Viskositätserhöhung bewirkt. Die Einlegezeit (offene Zeit) zwischen dem Klebstoffauftrag und dem Einlegen des Holzbodenelements ist genauso kurz wie bei den Dispersionsparkettklebstoffen. Zudem nachteilig sind die grundsätzlich allen zweikomponentigen Systemen innewohnenden Schwierigkeiten, die im zusätzlichen Mischaufwand, in der Gefahr eines nicht homogenen Mischens und in einer inadäquaten Einstellung des Mischungsverhältnisses durch den Anwender liegen. Die Haftungseigenschaften entsprechen denen der Dispersionsparkettklebstoffe.

In den neunziger Jahren wurden Reaktionsklebstoffe auf Polyurethanbasis zur Klebung von Parkett eingeführt. Zunächst waren es 2-Komponenten-Systeme, die aus einer Harzkomponente und einem Isocyanat-Härter bestehen. Das Bindemittel in der Harzkomponente ist ein hydroxy-funktionelles Polyol; die formulierte Harzkomponente enthält zusätzlich Wasserfänger, mineralische Füllstoffe, Katalysatoren und Additive. Die Isocyanat-Härter-Komponente besteht in der Regel aus technischem, oligomerem Methylendiphenyldiisocyanat (MDI, oft auch als Polymer-MDI bezeichnet). Vorteilhaft bei diesen Klebstoffen ist die im Vergleich zu Pulver-Parkettklebstoffen nochmals reduzierte und somit für die Praxis nicht mehr relevante holzquellende Wirkung sowie die längeren offenen Zeiten von ca. 30 bis 60 Minuten. Weiterhin vorteilhaft sind die Festigkeiten und Haftungseigenschaften, die eine extrem kraftschlüssige Verbindung des Belagholzes mit allen im Innenausbau üblichen, auch problematischen Untergründen gewährleisten. Nachteilig ist jedoch die auf dem Isocyanatgehalt beruhende Gefährdung für Gesundheit und Umwelt, die sich u.a. in der Gefahrstoffkennzeichnung nach der deutschen Gefahrstoffverordnung oder dem internationalen GHS-System ausdrückt. Danach werden diese Klebstoffe als gesundheitsschädlich, reizend und sensibilisierend eingestuft. Weiterhin nachteilig sind die grundsätzlich allen zweikomponentigen Systemen eigenen Probleme, wie sie bereits bei den Pulverklebstoffen beschrieben wurden.

Kurz nach den Zweikomponenten-Polyurethanklebstoffen wurden reaktive einkomponentige Polyurethan-Parkettklebstoffe entwickelt. Basis dieser Klebstoffe sind Isocyanatgruppen-haltige feuchtigkeitsreaktive Prepolymere auf Basis von Methylendiphenyldiisocyanat (MDI), die oft noch oligomeres und monomeres MDI enthalten. Weitere Bestandteile dieser Klebstoffe sind mineralische Füllstoffe, Katalysatoren und Additive. Im Vergleich zu den Zweikomponenten-Polyurethanklebstoffen vorteilhaft sind die nochmals verlängerten offenen Zeiten, die zusammen mit der Einkomponentigkeit die Handhabung und Verarbeitung des Klebstoffes erleichtern. Die holzquellende Wirkung entspricht der der Zweikomponenten-Polyurethanklebstoffe und ist dementsprechend unproblematisch. Die Haftungseigenschaften entsprechen denen der Lösemittel-Parkettklebstoffe und sorgen für eine gute Haftung auf üblichen Untergründen. Nachteilig an den Einkomponenten-Polyurethanklebstoffen ist jedoch weiterhin die Gefährdung für Gesundheit und Umwelt, die der der Zweikomponenten-Polyurethan-Parkettklebstoffe entspricht und auf einem Restgehalt an monomerem und oligomerem MDI in den Prepolymeren beruht.

Ende der neunziger Jahre wurden einkomponentige Reaktionsklebstoffe auf Basis von Toluendiisocyanat-Oligomeren (TDI-Klebstoffe) zur Klebung von Holzbodenbelägen eingeführt. Der Vorteil dieser Klebstoffe im Vergleich zu den etablierten MDI-basierten Polyurethanklebstoffen ist, dass sie nicht als gesundheitsschädlich, reizend oder sensibilisierend eingestuft werden und nach der deutschen Gefahrstoffverordnung und dem internationalen GHS-Kennzeichnungssystem nicht kennzeichnungspflichtig sind. Diese Eigenschaft ist auf ihren äußerst geringen Restgehalt an monomerem TDI zurückzuführen. Hinsichtlich offener Zeit und holzquellender Eigenschaften gleichen sie den MDI-basierten Polyurethanklebstoffen. Nachteilig im Vergleich zu diesen sind jedoch die nur mäßig ausgeprägten Haftungseigenschaften. Obwohl die Haftung bei diesen Klebstoffen neben physikalischen Wechselwirkungen auch auf der Ausbildung von kovalenten chemischen Bindungen beruht, ist sie nicht besser als bei den Dispersions- und Pulverparkettklebstoffen.

Die neueste Entwicklung sind Parkettklebstoffe auf Basis silanmodifizierter oligomerer Verbindungen, sogenannte SMP-Klebstoffe (mitunter auch als Hybridklebstoffe bezeichnet). Diese Klebstoffe sind gekennzeichnet durch oligomere organische Verbindungen (häufig auch als Prepolymere bezeichnet), die feuchtigkeitsreaktive Silangruppen, meist Dimethoxymethyl- oder Trimethoxysilangruppen, tragen. Nach Kontakt mit Feuchtigkeit aus dem Untergrund, dem Belagholz oder der Luft vernetzen die feuchtigkeitsreaktiven Silangruppen durch Hydrolyse und anschließende Kondensation zu einem dreidimensionalen Siloxan-Netzwerk, der Klebstoffmatrix.

Weitere Bestandteile dieser Klebstoffe sind flüssige Extender, Weichmacher, mineralische Füllstoffe, Wasserfänger, Haftvermittler, Katalysatoren und weitere Additive. Für die Verklebung von Parkett weisen silanmodifizierte Klebstoffe in der Regel folgende Vorteile auf:
- Einkomponentigkeit
- frei von Wasser und Lösemitteln
- ausreichend lange offene Zeiten
- keine praxisrelevante holzquellende Wirkung
- keine Einstufung als umwelt- oder gesundheitsgefährdend und somit kennzeichnungsfrei nach der deutschen Gefahrstoffverordnung und dem internationalem GHS-Kennzeichnungssystem

Weiterhin vorteilhaft ist die pseudoplastische Rheologie von SMP-Parkettklebstoffen. In der Praxis bedeutet dies, dass die Klebstoffe nicht verlaufen und sich gut mit einem Zahnspachtel auftragen lassen. Gezogene Klebstoffraupen bleiben formstabil und bieten damit eine wichtige Voraussetzung, kleinere Hohlräume zwischen Holzbodenbelag und Untergrund überbrücken zu können.

Silanmodifizierte Parkettklebstoffe enthalten typischerweise Weichmacher und/oder nichtreaktive flüssige Extender, die die Viskosität des Klebstoffes senken und notwendige Verarbeitungseigenschaften garantieren. Leider sind sie auch verantwortlich für eine Reihe anwendungstechnischer Probleme und Beschränkungen. Die Löseeigenschaften dieser migrationsfähigen Flüssigkeiten bedingen insbesondere ein Anlösen von Gussasphalt als Untergrund sowie ein Anlösen von typischerweise als Grundierung verwendeter Dispersionsgrundierungen auf Basis von Vinylacetat-Ethylen-, Styrol-Acrylat- oder Acrylsäureester-Copolymeren. Es ist daher bei silanmodifizierten Parkettklebstoffen grundsätzlich mit Haftungsproblemen auf dieser Art Untergründe zu rechnen - ein Umstand, der einer gröβeren Akzeptanz und Verwendung dieser Parkettklebstoffe bislang entgegen steht. Des weiteren besteht aufgrund der Migration flüssiger Bestandteile für entsprechend anfällige Beschichtungen und/oder Behandlungen des Belagholzes, wie Parkettwasserlacken, die Gefahr der An- bzw. Auflösung, was insbesondere im klebstoffnahen Fugenbereich zwischen zwei Parkettelementen zu unschönen Beeinträchtigungen des Erscheinungsbildes führen kann.

Cyclohexandicarbonsäure-Derivate als Weichmacher für silanmodifizierte Kleb- und Dichtstoffe werden in Patentdokument WO 2010/063740 A1 im Detail offenbart.

Ausgehend von diesem Stand der Technik ist es Aufgabe der vorliegenden Erfindung einen Parkettklebstoff zur Verfügung zu stellen, der alle oder mehrere der folgenden Vorteile aufweist: Er soll einfach anzuwenden sein, eine ausreichend lange offene Zeit gewährleisten, keine relevante holzquellende Wirkung besitzen, Gesundheit und Umwelt nicht gefährden, frei von Wasser, Lösemitteln, Weichmachern und nicht-reaktiven flüssigen Extendern sein, gute Haftungseigenschaften auf allen im Innenausbau üblichen, auch anlösbaren Untergründen besitzen und Holzbodenoberflächenbehandlungsmittel nicht anlösen. Eine weitere Aufgabe der Erfindung ist es, die Verwendung des erfindungsgemäβen Parkettklebstoffes zur Verklebung von Parkett, Holzbodenbelägen und Holzwerkstoffplatten unter den für den Parkettklebstoff angegebenen Zielsetzungen zur Verfügung zu stellen.

Diese Aufgabe wird gelöst durch den einkomponentigen, silanmodifizierten, Wasser- Lösemittel- und Weichmacher-freien Parkettklebstoff nach Anspruch 1, sowie dessen Verwendung nach Anspruch 12. Vorteilhafte Weiterbildungen des erfindungsgemäßen Parkettklebstoffes und der erfindungsgemäßen Verwendung werden in den jeweiligen abhängigen Ansprüchen gegeben.

Der erfindungsgemäße Parkettklebstoff ist ein silanmodifizierter Parkettklebstoff mit deutlich verbesserten Haftungseigenschaften und geringem Lösevermögen gegenüber Substraten. Er besitzt die verarbeitungs- und anwendungstechnischen Vorteile der dem Stand der Technik entsprechenden silanmodifizierten Klebstoffe ohne deren migrationsfähige nicht-reaktive Bestandteile zu enthalten und die damit verbundenen Haftungs- und Anlöseprobleme aufzuweisen. Alle im erfindungsgemäßen Klebstoff enthaltenen Flüssigkeiten enthalten terminale Silangruppen und werden kovalent in das Polysiloxan-Netzwerk eingebunden. Die Möglichkeit des vollständigen Verzichts auf nicht-reaktive Flüssigkeiten und die damit verbundenen vorteilhaften Eigenschaften des erfindungsgemäßen Parkettklebstoffes sind im wesentlichen zurückzuführen auf eine geeignete Kombination aus jeweils mindestens zwei ausgewählten Basispolymeren mit mindestens zwei speziellen mineralischen Komponenten. Die Basispolymere sind hinsichtlich Struktur und Molekulargewicht und die mineralischen Komponenten hinsichtlich Art, Oberflächenbeschaffenheit und Partikelgröße charakterisiert. Daneben ist auch die Auswahl eines geeigneten Härtungskatalysators, Trockenmittels und Haftvermittlers für die vorteilhaften Klebstoffeigenschaften verantwortlich.

Erfindungsgemäß enthält der einkomponentige, silanmodifizierte, Wasser- Lösemittel- und Weichmacherfreie Parkettklebstoff, der keine nicht-reaktiven Flüssig-Extender enthält und zur Verklebung von Parkett, Holzbodenbelägen und Holzwerkstoffplatten mit allen im Innenausbau üblichen, auch anlösbaren problematischen Untergründen geeignet ist, folgende Stoffe oder er besteht aus ihnen:
a) 12 bis 36 Massenprozent eines feuchtigkeitsreaktiven silanterminierten Polyalkylenoxid-Bindemittels mit einem mittleren Molekulargewicht von 6.000 bis 20.000 g/mol,
   wobei die Silanfunktionen über Alkylgruppen mit dem oligomeren Grundgerüst verbunden sind,
b) 2 bis 18 Massenprozent eines feuchtigkeitsreaktiven silanterminierten Polyalkylenoxid-Bindemittels mit einem mittleren Molekulargewicht von 300 bis 3.000 g/mol,
   wobei die Silanfunktionen über Alkylgruppen mit dem oligomeren Grundgerüst verbunden sind,
c) 30 bis 60 Massenprozent eines oberflächenhydrophobierten Marmorpulvers mit einem mittleren Partikeldurchmesser von 0,8 µm bis 4,0 µm,
d) 2 bis 10 Massenprozent eines oberflächenhydrophobierten Kreidepulvers mit einem mittleren Partikeldurchmesser von 0,2 bis 0,7 µm,
e) 0,1 bis 1,0 Massenprozent eines Härtungskatalysators,
f) 0,2 bis 3 Massenprozent eines feuchtigkeitsreaktiven silanmodifizierten Trockenmittels,
g) 0,2 bis 3 Massenprozent eines feuchtigkeitsreaktiven silanmodifizierten Haftvermittlers,
   wobei sich die Prozentangaben auf die Masse des verarbeitungsfertigen Parkettklebstoffes beziehen und die Summe der Bestandteile a) bis g) 46,5 % bis 100 % beträgt.

Insbesondere kann der Parkettklebstoff folgende Anteile an Bestandteilen aufweisen:
a) 23 bis 33 Massenprozent eines feuchtigkeitsreaktiven silanterminierten Polyalkylenoxid-Bindemittels mit einem mittleren Molekulargewicht von 7.000 bis 13.000 g/mol,
   wobei die Silanfunktionen über Alkylgruppen mit dem oligomeren Grundgerüst verbunden sind,
b) 7 bis 13 Massenprozent eines feuchtigkeitsreaktiven silanterminierten Polyalkylenoxid-Bindemittels mit einem mittleren Molekulargewicht von 700 bis 1.300 g/mol,
   wobei die Silanfunktionen über Alkylgruppen mit dem oligomeren Grundgerüst verbunden sind,
c) 48 bis 60 Massenprozent eines oberflächenhydrophobierten Marmorpulvers mit einem mittleren Partikeldurchmesser von 1,0 µm bis 3,0 µm,
d) 3 bis 7 Massenprozent eines oberflächenhydrophobierten Kreidepulvers mit einem mittleren Partikeldurchmesser von 0,3 bis 0,6 µm,
e) 0,15 bis 0,29 Massenprozent eines Härtungskatalysators,
f) 0,5 bis 1,5 Massenprozent eines feuchtigkeitsreaktiven silanmodifizierten Trockenmittels,
g) 0,5 bis 1,5 Massenprozent eines feuchtigkeitsreaktiven silanmodifizierten Haftvermittlers,
   wobei sich die Prozentangaben auf die Masse des verarbeitungsfertigen Parkettklebstoffes beziehen und die Summe der Bestandteile a) bis g) 82,15 % bis 100 % beträgt.

Eine bevorzugte Ausführungsform sieht vor, dass das Massenverhältnis von Bestandteil a) zu Bestandteil b) 1:1 bis 8:1 und das Massenverhältnis von Bestandteil c) zu Bestandteil d) 5:1 bis 20:1 beträgt. Insbesondere ist vorteilhaft, wenn das Massenverhältnis von Bestandteil a) zu Bestandteil b) 2:1 bis 4:1 und das Massenverhältnis von Bestandteil c) zu Bestandteil d) 8:1 bis 18:1 beträgt.

Als Bindemittel und Basispolymer enthält der erfindungsgemäße Parkettklebstoff 12 bis 36 Massenprozent, vorzugsweise 23 bis 33 Massenprozent, ganz besonders bevorzugt 28 Massenprozent eines feuchtigkeitsreaktiven silanterminierten Polyalkylenoxids, dessen Silanfunktionen über Alkylgruppen mit dem oligomeren Grundgerüst verbunden sind. Vorzugsweise ist das oligomere Grundgerüst ein Polypropylenoxid und die Silanfunktionen sind Dimethoxymethylsilangruppen. Das mittlere Molekulargewicht des Oligomers liegt zwischen 6.000 und 20.000 g/mol, vorzugsweise zwischen 7.000 und 13.000 g/mol, ganz besonders bevorzugt sind 10.000 g/mol.

Als Bindemittel und Reaktivverdünner enthält der erfindungsgemäße Parkettklebstoff 2 bis 18 Massenprozent, vorzugsweise 7 bis 13 Massenprozent, ganz besonders bevorzugt 10 Massenprozent eines feuchtigkeitsreaktiven silanterminierten Polyalkylenoxids, dessen Silanfunktionen über Alkylgruppen mit dem oligomeren Grundgerüst verbunden sind. Vorzugsweise ist das oligomere Grundgerüst ein Polypropylenoxid und die Silanfunktionen sind Dimethoxymethylsilangruppen. Das mittlere Molekulargewicht des Oligomers liegt zwischen 300 und 3.000 g/mol, vorzugsweise zwischen 700 und 1.300 g/mol, ganz besonders bevorzugt sind 1.000 g/mol.

Mindestens eine mineralische Komponente ist ein Marmorpulver mit einer mittleren Partikelgröße von 0,8 bis 4,0 µm, vorzugsweise 1,0 bis 3,0 µm, ganz besonders bevorzugt 2,0 µm. Das Marmorpulver ist zu 30 bis 60 Massenprozent, vorzugsweise 48 bis 60 Massenprozent, ganz besonders bevorzugt 55 Massenprozent im erfindungsgemäßen Parkettklebstoff enthalten.

Mindestens eine weitere mineralische Komponente ist ein Kreidepulver mit einer mittleren Partikelgröße von 0,2 bis 0,7 µm, vorzugsweise 0,3 bis 0,6 µm, ganz besonders bevorzugt 0,4 µm. Das Kreidepulver ist im erfindungsgemäßen Parkettklebstoff zu 2 bis 10 Massenprozent, vorzugsweise 3 bis 7 Massenprozent, ganz besonders bevorzugt zu 4 Massenprozent enthalten.

Eine Substitution von Kreide und/oder Marmor durch gefällte Calciumcarbonatpulver ist nicht möglich, da diese kleinere als die erfindungsgemäß geforderten Partikelgrößen besitzen. Ebenso führt die Substitution der Kreide und/oder des Marmors durch anderes Calciumcarbonatgestein, wie Kalkstein, nicht zu den erfindungsgemäßen Vorteilen.

Die Oberflächen der Kreide- und Marmorpartikel sind hydrophobiert, wobei die Hydrophobierung entweder durch Behandlung mit einer oder mehrerer Fettsäuren und/oder ihrem Salz/ihren Salzen, vorzugsweise durch Behandlung mit Stearinsäure und/oder Stearat oder über eine Silanisierung, vorzugsweise durch Umsetzung mit einem reaktiven Silan, ganz besonders bevorzugt durch Umsetzung mit Aminosilan, erfolgt.

Zur Beschleunigung des Aushärtungsvorganges enthält der erfindungsgemäße Parkettklebstoff 0,1 bis 1,0 Massenprozent, vorzugsweise 0,15 bis 0,29 Massenprozent, ganz besonders bevorzugt 0,29 Massenprozent eines Härtungskatalysators. Organo-Übergangsmetall-Verbindungen sind bevorzugte Härtungskatalysatoren; ganz besonders bevorzugt ist Dibutylzinndiacetylacetonat.

Als Wasserfänger enthält der erfindungsgemäße Parkettklebstoff 0,2 bis 3 Massenprozent, vorzugsweise 0,5 bis 1,5 Massenprozent, ganz besonders bevorzugt 0,8 Massenprozent eines feuchtigkeitsreaktiven silanmodifizierten Trockenmittels. Trimethoxysilan-terminierte Alkene werden bevorzugt eingesetzt; ganz besonders bevorzugt ist Vinyltrimethoxysilan.

Zur Verbesserung der Haftungseigenschaften enthält der erfindungsgemäße Parkettklebstoff 0,2 bis 3 Massenprozent, vorzugsweise 0,5 bis 1,5 Massenprozent, ganz besonders bevorzugt 1,0 Massenprozent eines feuchtigkeitsreaktiven silanmodifizierten Haftvermittlers. Trimethoxysilan-terminierte Aminoalkylverbindungen werden bevorzugt eingesetzt; ganz besonders bevorzugt ist 3-Aminopropyltrimethoxysilan.

Zur Verbesserung der Haltbarkeit kann der erfindungsgemäße Parkettklebstoff zusätzlich Antioxidationsmittel und/oder UV-Licht-Absorber (Fotostabilisatoren) von zusammen bis zu 3 Massenprozent, vorzugsweise 0,2 bis 1 Massenprozent, ganz besonders bevorzugt 0,21 Massenprozent enthalten.

Als Antioxidationsmittel werden bevorzugt sterisch gehinderte Phenole eingesetzt, vorzugsweise 3,5-Bis(1,1-dimethylethyl)-4-hydroxy-benzylpropansäure-C7-C9-isoalkylester.

Als UV-Licht-Absorber werden bevorzugt sterische gehinderte Amine verwendet, vorzugsweise Bis(1,2,2,6,6-pentamethyl-4-piperidyl)sebacat oder Methyl-1,2,2,6,6-pentamethyl-4-piperidylsebacat; ganz besonders bevorzugt ist eine Mischung dieser Sebacate.

Als rheologisches Additiv kann der erfindungsgemäße Parkettklebstoff zusätzlich bis zu 3 Massenprozent, vorzugsweise 0,3 bis 1,3 Massenprozent, ganz besonders bevorzugt 0,7 Massenprozent eines Wachses, vorzugsweise eines Polyamidwachses enthalten.

Die einzelnen Bestandteile der erfindungsgemäßen Klebstoffzusammensetzung können jeweils als Reinstoffe enthalten sein oder, sofern die für den jeweiligen Bestandteil geltenden Kriterien wie Gesamtanteil, Massenverhältnis, Molekulargewicht, Struktur, Chemie, Partikelgröße und/oder Oberflächenbeschaffenheit erfüllt bleiben, als Gemisch ähnlicher Stoffe.

Zur Verbesserung bzw. Einstellung von Erscheinungsbild, Rheologie und/oder Stabilität kann der erfindungsgemäße Parkettklebstoff weitere Additive wie Pigmente, Farbstoffe, organische/anorganische Füllstoffe, Harze, Wachse oder Konservierungsmittel enthalten.

Auf den Einsatz von Weichmachern und nicht-reaktiven Flüssig-Extendern wird aufgrund ihrer Migrationsfähigkeit und Löseeigenschaften vollständig verzichtet. Die erfindungsgemäße Zusammensetzung des Parkettklebstoffes bewirkt, dass sich dies nicht nachteilig auswirkt, sondern die vorteilhaften Eigenschaften silanmodifizierter Parkettklebstoffe bestehen bleiben. Zusätzlich sind die Haftungseigenschaften deutlich verbessert und das unerwünschte Anlösen von Substratoberflächen wird vermieden.

Der erfindungsgemäße Parkettklebstoff besitzt eine Reihe verarbeitungs- und anwendungstechnischer Vorteile, die in dieser Kombination kein anderer Parkettklebstoff auf sich vereint:
- Einkomponentigkeit
- frei von Weichmachern und nicht-reaktiven flüssigen Bestandteilen sowie von Wasser und Lösemitteln
- ausreichend lange offene Zeit
- keine praxisrelevante holzquellende Wirkung
- frei von umwelt- und gesundheitsgefährdenden Substanzen
- kennzeichnungsfrei nach aktuellem GHS-Kennzeichnungssystem und deutscher Gefahrstoffverordnung
- ausgeprägte pseudoplastische Rheologie mit geeigneter Verarbeitungsviskosität
- leichte Auftragbarkeit mittels Zahnspachtel und strukturbeständige Klebstoffraupen
- ausgezeichnete Haftungseigenschaften auf allen feuchten und trockenen im Innenausbau üblichen, auch problematischen Untergründen
- kein Anlösen oder Angreifen von Holzbodenoberflächenbehandlungsmitteln, insbesondere Parkettwasserlacken
- sehr breites Anwendungsgebiet
- einfache und sichere Handhabung und Anwendung

Der erfindungsgemäße Parkettklebstoff ist einkomponentig und frei von Wasser, Lösemitteln, Weichmachern, nicht-reaktiven Flüssig-Extendern und anderen migrationsfähigen Bestandteilen.

Die offene Zeit liegt im Bereich von 60 bis 100 Minuten (DIN EN 14293:2006-10 ), wodurch eine vergleichsweise lange Verarbeitungszeit gewährleistet ist.

Aufgrund seiner Wasser- und Lösemittelfreiheit besteht keine praxisrelevante holzquellende Wirkung des Klebstoffes.

Die Lösemittelfreiheit und der vollständige Verzicht auf den Zusatz von Weichmachern, Isocyanaten und anderen potentiell gesundheitsgefährdenden Substanzen bedingt die Gesundheits- und Umweltverträglichkeit des erfindungsgemäßen Parkettklebstoffes. Dies ist daran abzulesen, dass der Klebstoff gemäß der aktuellen deutschen Gefahrstoffverordnung und dem internationalen GHS-Gefahrstoffkennzeichnungssystem nicht kennzeichnungspflichtig ist.

Die ausgeprägte pseudoplastische Rheologie und eine Viskosität zwischen 60.000 und 120.000 mPa·s (Prüfbedingungen gemäß DIN EN ISO 2555:2000-01, 20 Umdrehungen pro Minute) garantieren zusammen mit der Einkomponentigkeit eine einfache Verarbeitung des erfindungsgemäßen Klebstoffes. Der Klebstoff lässt sich leicht mit einem Zahnspachtel auftragen und lässt formstabile Klebstoffraupen bis zu einer Höhe von 10 mm zu.

Der erfindungsgemäße Parkettklebstoff besitzt ausgezeichnete Haftungseigenschaften auf allen im Innenausbau üblichen Untergründen wie Gussasphalt, Beton, Zement, Zementestrich, Zementfließestrich, Zementmörtel, zementgebundener Holzfaser, Keramik, Naturstein, Calciumsulfatestrich, Calciumsulfatfließestrich, Magnesitestrich, Holz, Holzwerkstoff, Sperrholz, Kork, Gips, Gipsfaser, Gipskarton, Hartfaser, Spachtelmasse, Grundierungen, textilem faserartigen Material, natürlichem und synthetischem polymeren Material oder einer Kombination dieser Untergründe. Die Haftung ist auch auf bis zu 8 Massenprozent Wasser enthaltenden Untergründen, wie z.B. feuchtem Beton oder Zementestrich, gewährleistet.

Handelsübliches Parkett, Holzbodenbeläge und/oder Holzwerkstoffplatten, die ganz oder teilweise aus europäischen Laub- und/oder Nadelholzarten, nichteuropäischen Holzarten oder einer Kombination dieser Holzarten bestehen, werden sicher und kraftschlüssig mit dem Untergrund verklebt.

Holzbodenoberflächenbehandlungsmittel, insbesondere Parkettwasserlacke, werden von dem erfindungsgemäßen Parkettklebstoff nicht angelöst oder angegriffen.

Das sehr breite Einsatzgebiet, die einfache Handhabung und die vorteilhaften Verarbeitungseigenschaften des erfindungsgemäßen Parkettklebstoffes garantieren eine einfache und sichere Anwendung. Der Anwender benötigt keine bautechnischen und/oder chemischen Fach- oder Vorkenntnisse. Somit ist der erfindungsgemäße Parkettklebstoff sogar für die Anwendung durch Laien geeignet.

In Tabelle 1 wird ein Ausführungsbeispiel des erfindungsgemäßen Parkettklebstoffes mit einer besonders bevorzugten Zusammensetzung gegeben.

In Tabelle 4 und 5 sind die Zusammensetzungen der handelsüblichen Parkettklebstoffe SMP-920 und SMP-930 (Stauf Klebstoffwerk GmbH) zusammengefasst. In vergleichenden Untersuchungen dienen sie als Referenz zum erfindungsgemäßen Klebstoff.

In ihrer Zusammensetzung unterscheiden sich die beiden handelsüblichen Parkettklebstoffe von dem erfindungsgemäßen Parkettklebstoff im wesentlichen durch eine abweichende Komposition aus Basispolymer und mineralischen Komponenten sowie ihrem Weichmacheranteil. Oberflächenhydrophobiertes Marmorpulver - unverzichtbarer mineralischer Hauptbestandteil des erfindungsgemäßen Klebstoffes - ist in den handelsüblichen Klebstoffen nicht enthalten. Anders herum enthalten beide handelsüblichen Klebstoffe Kalksteinpulver und teilweise auch gefällte Calciumcarbonate und Kieselsäure, die im erfindungsgemäßen Parkettklebstoff nicht vorkommen. Auch unterscheiden sich die mittleren Partikeldurchmesser und deren Verteilungsprofile zwischen erfindungsgemäßem Klebstoff und den handelsüblichen Formulierungen. So sind z.B. Partikelgrößen mineralischer Komponenten von > 4 µm im erfindungsgemäßen Parkettklebstoff nicht enthalten.

Ein weiterer Unterschied ist der Weichmachergehalt, welcher bei SMP-930 15 Massenprozent und bei SMP-920 20 Massenprozent der verarbeitungsfertigen Klebstoffmischung beträgt. Im erfindungsgemäßen Parkettklebstoff ist dagegen kein Weichmacher enthalten. SMP-920 besteht zu 20 Massenprozent aus Diisononylphthalat. SMP-930 enthält 11 Massenprozent Bis(2-propylheptyl-phthalat) und 4 Massenprozent Phenolalkylsulfonsäure als Weichmacher. Vor dem Hintergrund einer fortpflanzungsschädlichen Wirkung der Phthalate und unerwünschter Weichmachereffekte ist SMP-930 im Vergleich zu SMP-920 als höherwertiger zu sehen.

Mit dem in Tabelle 1 beschriebenen erfindungsgemäßen Parkettklebstoff wurde die Stärke der Klebstoffhaftung auf unterschiedlichen Untergründen ermittelt und mit der handelsüblicher silanmodifizierter Parkettklebstoffe (SMP-920 und SMP-930, Stauf Klebstoffwerk GmbH) verglichen.

Als Untergrund wurde eine mit Gussasphalt beschichtete Holzwerkstoffplatte, eine mit VDP160 (Styrol-Acrylat basierte Dispersionsgrundierung, Stauf Klebstoffwerk GmbH) grundierte Faserzementplatte und eine unbeschichtete Betonplatte (Festigkeitsklasse C 20/25 gemäß DIN EN 206-1:2001-07) ausgewählt. Als Messparameter diente die Scherfestigkeit, welche gemäß DIN EN 14293:2006-10 (Lagerungsart A, 40°C) bestimmt wurde. Bei dem Versuch wurde so vorgegangen, dass die zu beschichtenden Untergründe zunächst mit Gussasphalt (Schichtdicke 25 mm) bzw. VDP160 (Schichtdicke 0,2 mm) bestrichen und anschließend 24 Stunden bei Normalklima (23°C, 50% relative Luftfeuchtigkeit) trocknen gelassen wurden. Die Betonplatte wurde zeitgleich ebenfalls für 24 Stunden bei Normalklima gelagert. Im Anschluss wurden die Untergründe mit einer 0,85 mm starken Klebstoffschicht gleichmäßig bestrichen und die Buchenstäbe in die Klebstoffschicht gedrückt. Nach siebentägiger Lagerung in einer Klimakammer bei 20°C und 50% relativer Luftfeuchtigkeit wurde die Temperatur auf 50°C erhöht und für weitere 7 Tage bei 50 % relativer Luftfeuchte klimatisiert. Anschließend wurden die Probenkörper für 24 Stunden auf Normalklima konditioniert. Nun erfolgte die Scherprüfung gemäß DIN EN 14293:2006-10, wobei sich die in Tabelle 2 dargestellten Messwerte ergaben.

Die Ergebnisse zeigen, dass der erfindungsgemäße Parkettklebstoff auf dem aus haftungstechnischer Sicht unproblematischen Betonuntergrund im Vergleich zu SMP-930 bereits eine um 24 % höhere Scherfestigkeit und im Vergleich zu SMP-920 sogar eine um 36 % höhere Scherfestigkeit besitzt. Auf den durch Weichmacher und Flüssig-Extender anlösbaren und daher eher problematischen Untergründen verschiebt sich diese Differenz weiter zugunsten des erfindungsgemäßen Klebstoffes. So besitzt er auf Gussasphalt im Vergleich zu SMP-930 eine um 1.818 % erhöhte Scherfestigkeit, die sich im Vergleich zu SMP-920 sogar auf 2.538 % erhöht. Mit der Dispersionsgrundierung VDP160 werden ähnlich deutliche Ergebnisse erzielt. Der erfindungsgemäße Parkettklebstoff besitzt auf diesem Untergrund im Vergleich zu SMP-930 eine um 765 % erhöhte und im Vergleich zu SMP-920 eine um 1.084 % erhöhte Scherfestigkeit.

Aus diesen Daten ist ersichtlich, dass der erfindungsgemäße Parkettklebstoff im Unterschied zu den handelsüblichen silanmodifizierten Parkettklebstoffen eine vergleichsweise hohe Scherfestigkeit von größer gleich 2,0 N/mm² besitzt und diese auch auf problematischen Untergründen gewährleistet. Die Haftungseigenschaften des erfindungsgemäßen Parkettklebstoffes sind deshalb als deutlich besser einzustufen als die handelsüblicher silanmodifizierter Parkettklebstoffe.

In nachfolgendem Experiment wurde die anlösende und erweichende Wirkung des erfindungsgemäßen Parkettklebstoffes auf Parkettwasserlacke untersucht und mit der handelsüblicher silanmodifizierter Parkettklebstoffe (SMP-920 und SMP-930, Stauf Klebstoffwerk GmbH) mit Weichmacheranteilen von 20 (SMP-920) und 15 Massenprozent (SMP-930) verglichen. Als Parkettwasserlack wurden handelsübliche einkomponentige Systeme auf Polyurethan-/Acrylat-Dispersionsbasis (Aqua-Seal® EcoGold W3, Berger-Seidle Siegeltechnik GmbH und LOBADUR® WS Global, Loba GmbH & Co.KG) mit vergleichsweise geringer Resistenz gegenüber Weichmachern und Flüssig-Extendern ausgewählt.

Für die Untersuchung wurde der entsprechende Klebstoff vollflächig auf die Rückseite eines Mehrschichtparkettelements mit den Abmessungen Länge = 600 mm, Breite = 75 mm, Stärke = 11 mm aufgetragen. Die Rückseite der Mehrschichtparkettelemente besaß alle 5 cm rechtwinkelige Einschnitte einer Breite von 2 mm und einer Tiefe von 6 mm, wobei die Einschnitte parallel zur Schmalkante der Parkettelemente orientiert waren. Insgesamt wies ein Parkettstab 11 Einschnitte auf.

Zum Klebstoffauftrag wurden diese mit Klebstoff ausgefüllt und die gesamte Rückseite des Parkettelements so mit einem glatten Spachtel abgezogen, dass nur Klebstoff in den Einschnitten verblieb. Nach einer Aushärtezeit von 7 Tagen bei 20°C und 50% relativer Luftfeuchte wurde die Rückseite der Parkettelemente geschliffen, so dass die Holzoberfläche wieder roh war. Im Bereich der Einschnitte verblieb der Klebstoff.

Nun wurde die Oberfläche mit Wasserlack vollflächig lackiert. Es wurden 3 Lackschichten mit einer Auftragsmenge von je 110 g/m² aufgebracht, wobei nach dem ersten und zweiten Auftrag jeweils ein Zwischenschliff erfolgte. Nach Verbringung in eine Klimakammer und 3 Tagen Trocknung bei 20°C und 50% relativer Luftfeuchte wurden die Probenkörper bei 50°C und 50 % relativer Luftfeuchte weiter klimatisiert. Nach einer Lagerungsdauer von 3, 20 und 45 Tagen wurden die Probenkörper jeweils innerhalb von 3 Stunden auf 20°C herunter temperiert und der Klimakammer entnommen.

Nun wurde als Testsubstanz das Fugenkittpulver Pafuki der Berger-Seidle Siegeltechnik GmbH, Grünstadt auf die Oberfläche der Parkettelemente gestreut und nach einer Einwirkzeit von 10 Sekunden wieder abgeblasen. Es wurde dann optisch die Verfärbung der Lackoberfläche nach einem fünfstufigen semiquantitativen Klassifikationssystem beurteilt, wobei 1 = keine Verfärbung, 2 = minimale Verfärbung, 3 = leichte Verfärbung, 4 = deutliche Verfärbung und 5 = ausgeprägte Verfärbung bedeutet. Im Bereich der Einschnitte, in denen die Lacke auf die Klebstoffe aufgetragen wurden, sowie deren Rändern, waren unterschiedlich stark ausgeprägte dauerhafte Verfärbungen zu erkennen. Diese sind auf das Anlösen und Erweichen der Wasserlacke infolge der Einwirkung migrationsfähiger anlösender Klebstoffbestandteile (Weichmacher und/oder Flüssig-Extender) zurückzuführen.

Um beurteilen zu können ob die nach dem Abblasen der Testsubstanz (Trockenreinigung) zurückbleibenden Verfärbungen abwaschbar sind, wurden die Probenkörperoberflächen nach der ersten Verfärbungsbeurteilung mit Tensid-haltigem Wasser abgewaschen (Nassreinigung), getrocknet und anschließend einer erneuten Beurteilung unterzogen.

Die Ergebnisse dieser Experimente sind in Tabelle 3 aufgeführt. Sie weisen aus, dass der erfindungsgemäße Klebstoff im Unterschied zu handelsüblichen SMP-Klebstoffen zu keinem Zeitpunkt eine anlösende oder erweichende Wirkung auf die untersuchten Polyurethan/- Acrylat-Wasserlacke ausübt. Da die untersuchten Einkomponenten-Wasserlacke zu den weniger Weichmacher- und Flüssig-Extender-resistenten Wasserlacken gehören, ist auch bei anderen, stärker resistenten, z.B. Zweikomponenten-Wasserlacken, nicht mit einer anlösenden oder erweichenden Wirkung durch den erfindungsgemäßen Parkettklebstoff zu rechnen.

Die offene Zeit des erfindungsgemäßen Klebstoffes (Zusammensetzung gemäß Tabelle 1) wurde gemäß DIN EN 14293:2006-10 ermittelt. Sie betrug 75 Minuten, d.h. innerhalb dieses Zeitraumes nach dem Klebstoffauftrag können noch Parkettbeläge in die Klebstoffschicht gedrückt und mit dem Untergrund verklebt werden. Auch die Herausnahme schon gelegter Beläge und deren Neuausrichtung ist innerhalb dieses Zeitraumes ohne weiteres durchführbar.

Mit dem in Tabelle 1 beschriebenen erfindungsgemäßen Parkettklebstoff wurde die Viskosität gemäß DIN EN ISO 2555:2000-01 bestimmt. Es wurde eine Viskosität von 91.200 ± 6.300 mPa·s (n=5, 20 Umdrehungen pro Minute) gemessen. Die Viskosität liegt damit im Bereich von 60.000 bis 120.000 mPa·s, was leichte Verstreichbarkeit und formstabile Klebstoffraupen bis zu einer Höhe von 10 mm garantiert. In Kombination mit der Einkomponentigkeit und der offenen Zeit ergibt sich daraus eine einfache Handhabung und Verarbeitung des erfindungsgemäßen Parkettklebstoffes.

**Tabelle 1: Beispielhafte, besonders bevorzugte Zusammensetzung des erfindungsgemäßen Parkettklebstoffes (Anteile in Massenprozent).**

| **Rohstoff** | **Chemie** | **Funktion** | **Hersteller** | **Anteil** [%] |
|---|---|---|---|---|
| SAX 260 | Dimethoxymethylsilan-terminiertes Polypropylenoxid-Oligomer, MW: ca**.** 10.000 g/mol | Bindemittel, Basispolymer | Kaneka | 28,0 |
| SAT 010 | Dimethoxymethylsilan-terminiertes Polypropylenoxid-Oligomer, MW: ca. 1.000 g/mol | Bindemittel, Reaktivverdünner | Kaneka | 10,0 |
| Omyabond 302 | Kreidepulver, mit Stearinsäure oberflächenhydrophobiert, mittlerer Partikeldurchmesser: 0,4 µm | Mineralische Komponente | Omya | 4,0 |
| Omyabond 520 FL | Marmorpulver, mit Stearinsäure oberflächenhydrophobiert, mittlerer Partikeldurchmesser: 2,0 µm | Mineralische Komponente | Omya | 55,0 |
| Metatin K 740 | Dibutylzinndiacetylacetonat | Katalysator | Acima | 0,29 |
| Geniosil XL 10 | Vinyltrimethoxysilan | Trockenmittel | Wacker Chemie | 0,80 |
| Geniosil GF 96 | 3-Aminopropyltrimethoxysilan | Haftvermittler | Wacker Chemie | 1,0 |
| Tinuvin 765 | Mischung aus Bis(1,2,2,6,6-pentamethyl-4-piperidyl)sebacat und Methyl-1,2,2,6,6-pentamethyl-4-piperidylsebacat | UV-Licht-Absorber | Ciba | 0,06 |
| Irganox 1135 | 3,5-Bis(1,1-dimethylethyl)-4-hydroxy-benzylpropansäure-C7-C9-isoalkylester | Antioxidationsmittel | Ciba | 0,15 |
| Disparlon 6100 | Polyamidwachs | Rheologisches Additiv | Kusumoto | 0,70 |

**Tabelle 2: Ergebnisse der Zugscherfestigkeitsprüfung gemäß DIN EN 14293:2006-10 (Lagerungsart A) an erfindungsgemäßem Parkettklebstoff, SMP-930 und SMP-920 auf verschiedenen Untergründen. Messwerte ± Standardabweichung (SD) sowie Anzahl der jeweiligen Messungen (n).**

| **Klebstoff** | **Zugscherfestigkeit ± SD** auf Gussasphalt |
|---|---|
| Erfindungsgemäßer Klebstoff (Zusammensetzung gemäß Tabelle 1) | 2,11 ± 0,22 N/mM² (n=7) |
| SMP-930 | 0,11 ± 0,07 N/mm² (n=6) |
| SMP-920 | 0,08 ± 0,06 N/mm² (n=6) |
| | |

| **Klebstoff** | **Zugscherfestigkeit ± SD** auf Grundierung VDP160 |
|---|---|
| Erfindungsgemäßer Klebstoff (Zusammensetzung gem. Tabelle 1) | 2,25 ± 0,26 N/mm² (n=7) |
| SMP-930 | 0,26 ± 0,08 N/mm² (n=6) |
| SMP-920 | 0,19 ± 0,09 N/mm² (n=6) |
| | |

| **Klebstoff** | **Zugscherfestigkeit ± SD** auf Betonplatte |
|---|---|
| Erfindungsgemäßer Klebstoff (Zusammensetzung gem. Tabelle 1) | 2,30 ± 0,20 N/mm² (n=7) |
| SMP-930 | 1,85 ± 0,17 N/mm² (n=7) |
| SMP-920 | 1,69 ± 0,21 N/mm² (n=6) |

**Tabelle 3: Ergebnisse zur anlösenden und erweichenden Wirkung verschiedener Parkettklebstoffe (erfindungsgemäßer Parkettklebstoff gemäß Tabelle 1, SMP-920 und SMP-930) auf zwei einkomponentige Parkett-Wasserlacke (LOBA-DUR WS Global und Aqua-Seal EcoGold W3) nach 3, 20 und 45 Tagen Einwirkdauer. Beurteilung der Verfärbungen nach 5-stufigem Beurteilungssystem (5 = schlechtestes, 1 = bestes Resultat) von jeweils 11 Einzelproben nach Abblasen (Trockenreinigung) und Abwischen (Nassreinigung) der Probenoberfläche.**

| | **Nach 3 Tagen** | | **Nach 20 Tagen** | | **Nach 45 Tagen** | |
|---|---|---|---|---|---|---|
| | **Trockenreinigung** | **Nassreinigung** | **Trockenreinigung** | **Nassreinigung** | **Trockenreinigung** | **Nassreinigunq** |
| **Wasserlack Aqua-Seal® EcoGold W3** | | | | | | |
| SMP-930 | 5 | 5 | 5 | 5 | 5 | 5 |
| SMP-920 | 5 | 5 | 5 | 5 | 5 | 5 |
| Erfindungsgemäßer Klebstoff | | 1 | 1 | 1 | 1 | 1 |
| | | | | | | |

| **Wasserlack LOBADUR® WS Global** | | | | | | |
|---|---|---|---|---|---|---|
| SMP-930 | 5 | 4 | 5 | 4 | 5 | 4 |
| SMP-920 | 5 | 5 | 5 | 5 | 5 | 5 |
| Erfindungsgemäßer Klebstoff | | 1 | 1 | 1 | 1 | 1 |
| | | | | | | |
| | | | | | | |

| **Legende** | | | | | | |
|---|---|---|---|---|---|---|
| ausgeprägte Verfärbung | = 5 | | | | | |
| deutliche Verfärbung | = 4 | | | | | |
| leichte Verfärbung | = 3 | | | | | |
| minimale Verfärbung | = 2 | | | | | |
| keine Verfärbung | = 1 | | | | | |

**Tabelle 4: Zusammensetzung des handelsüblichen Parkettklebstoffes SMP-920 (Stauf Klebstoffwerk GmbH; Anteile in Massenprozent).**

| **Rohstoff** | **Chemie** | **Funktion** | **Hersteller** | **Anteil [%]** |
|---|---|---|---|---|
| S 203 H | Dimethoxymethylsilan-terminiertes Polypropylenoxid-Oligomer; MW: ca. 12.000 g/mol | Bindemittel, Basispolymer | Kaneka | 11 |
| S 303 H | Dimethoxymethylsilan-terminiertes Polypropylenoxid-Oligomer; MW: ca. 18.000 g/mol | Bindemittel, Basispolymer | Kaneka | 6 |
| Silquest A-171 | Vinyltrimethoxysilan | Trockenmittel | Momentive | 0,7 |
| Silquest A-1637 | 4-Amino-3,3-dimethylbutyltrimethoxysilan | Haftvermittler | Momentive | 0,7 |
| TIB KAT 223 | Dioctylzinn-bis(2,4-pentandionat) | Katalysator | TIB Chemicals | 0,34 |
| Irganox 1726 | 4,6-Bis(dodecylthiomethyl)-o-cresol | Antioxidationsmittel | Ciba | 0,1 |
| DINP | Diisononylphthalat | Weichmacher | BASF | 20 |
| Crayvallac SLX | Polyamidwachs | Rheologisches Additiv | Cray Valley | 0,4 |
| Omya BLP 3 | Kalksteinpulver, mit Stearinsäure oberflächenhydrophobiert, mittlerer Partikeldurchmesser: 5,7 µm | Mineralische Komponente | Omya | 19,5 |
| Calcilit 6 HS | Kalksteinpulver, mit Stearinsäure oberflächenhydrophobiert, mittlerer Partikeldurchmesser: 7 µm | Mineralische Komponente | Alpha-Calcit | 8,66 |
| MS 70 F | Kalksteinpulver, mittlerer Partikeldurchmesser: 4,5 µm | Mineralische Komponente | Schön und Hippelein | 15 |
| Calcifin 20 H | Kalksteinpulver, mit Stearinsäure oberflächenhydrophobiert, mittlerer Partikeldurchmesser: 4,4 µm | Mineralische Komponente | Alpha-Calcit | 16 |
| HDK H 18 | Hochdisperse Kieselsäure, oberflächensilanisiert | Mineralische Komponente | Wacker | 1,6 |

**Tabelle 5: Zusammensetzung des handelsüblichen Parkettklebstoffes SMP-930 (Stauf Klebstoffwerk GmbH; Anteile in Massenprozent)**

| **Rohstoff** | **Chemie** | **Funktion** | **Hersteller** | **Anteil [%]** |
|---|---|---|---|---|
| S 203 H | Dimethoxymethylsilan-terminiertes Polypropylenoxid-Oligomer; MW: ca. 12.000 g/mol | Bindemittel, Basispolymer | Kaneka | 3 |
| S 303 H | Dimethoxymethylsilan-terminiertes Polypropylenoxid-Oligomer; MW: ca. 18.000 g/mol | Bindemittel, Basispolymer | Kaneka | 16 |
| Dynasylan VTMO | Vinyltrimethoxysilan | Trockenmittel | Degussa | 0,8 |
| KBM 603 | N-2-(aminoethyl)-3-aminopropyl-trimethoxysilan | Haftvermittler | Shin-Etsu | 0,8 |
| Neostann U 220 H | Dibutylzinndiacetylacetonat | Katalysator | Nitto Kasei | 0,32 |
| Irganox 1726 | 4,6-Bis(dodecylthiomethyl)-o-cresol | Antioxidationsmittel | Ciba | 0,1 |
| Palatinol 10-P | Bis(2-propylheptylphthalat) | Weichmacher | BASF | 11 |
| Mesamoll | Phenolalkylsulfonsäureester | Weichmacher | Bayer | 4 |
| Thixatrol MAX | Polyamidwachs | Rheologisches Additiv | elementis | 0,5 |
| Omyacarb 10 BG | Kalksteinpulver, mittlerer Partikeldurchmesser: 7 µm | Mineralische Komponente | Omya | 19,5 |
| Calcifin 20 H | Kalksteinpulver, mit Stearinsäure oberflächenhydrophobiert, mittlerer Partikeldurchmesser: 4,4 µm | Mineralische Komponente | Alpha-Calcit | 41,58 |
| Socal 312 | Gefälltes Calciumcarbonat, gecoated, mittlerer Partikeldurchmesser: 0,07 µm | Mineralische Komponente | Solvay | 2,4 |

## Patentansprüche

1. Wasser-, Lösemittel- und Weichmacher-freier Einkomponenten-Parkettklebstoff auf Basis silanterminierter Polyalkylenoxid-Oligomerer,
**dadurch gekennzeichnet, dass** er keine nicht-reaktiven Flüssig-Extender enthält und folgende Stoffe enthält oder aus ihnen besteht:
a) 12 bis 36 Massenprozent eines feuchtigkeitsreaktiven silanterminierten Polyalkylenoxid-Bindemittels mit einem mittleren Molekulargewicht von 6.000 bis 20.000 g/mol,
wobei die Silanfunktionen über Alkylgruppen mit dem oligomeren Grundgerüst verbunden sind,
b) 2 bis 18 Massenprozent eines feuchtigkeitsreaktiven silanterminierten Polyalkylenoxid-Bindemittels mit einem mittleren Molekulargewicht von 300 bis 3.000 g/mol,
wobei die Silanfunktionen über Alkylgruppen mit dem oligomeren Grundgerüst verbunden sind,
c) 30 bis 60 Massenprozent eines oberflächenhydrophobierten Marmorpulvers mit einem mittleren Partikeldurchmesser von 0,8 µm bis 4,0. µm,
d) 2 bis 10 Massenprozent eines oberflächenhydrophobierten Kreidepulvers mit einem mittleren Partikeldurchmesser von 0,2 bis 0,7 µm,
e) 0,1 bis 1,0 Massenprozent eines Härtungskatalysators,
f) 0,2 bis 3 Massenprozent eines feuchtigkeitsreaktiven silanmodifizierten Trockenmittels, sowie
g) 0,2 bis 3 Massenprozent eines feuchtigkeitsreaktiven silanmodifizierten Haftvermittlers,
wobei sich die Prozentangaben auf die Masse des verarbeitungsfertigen Parkettklebstoffes beziehen und die Summe der Bestandteile a) bis g) 46,5 % bis 100 % beträgt.

2. Wasser-, Lösemittel- und Weichmacher-freier Einkomponenten-Parkettklebstoff nach Anspruch 1, **dadurch gekennzeichnet, dass** er keine nicht-reaktiven Flüssig-Extender enthält und folgende Stoffe enthält oder aus ihnen besteht:
a) 23 bis 33 Massenprozent eines feuchtigkeitsreaktiven silanterminierten Polyalkylenoxid-Bindemittels mit einem mittleren Molekulargewicht von 7.000 bis 13.000 g/mol,
wobei die Silanfunktionen über Alkylgruppen mit dem oligomeren Grundgerüst verbunden sind,
b) 7 bis 13 Massenprozent eines feuchtigkeitsreaktiven silanterminierten Polyalkylenoxid-Bindemittels mit einem mittleren Molekulargewicht von 700 bis 1.300 g/mol,
wobei die Silanfunktionen über Alkylgruppen mit dem oligomeren Grundgerüst verbunden sind,
c) 48 bis 60 Massenprozent eines oberflächenhydrophobierten Marmorpulvers mit einem mittleren Partikeldurchmesser von 1,0 µm bis 3,0 µm,
d) 3 bis 7 Massenprozent eines oberflächenhydrophobierten Kreidepulvers mit einem mittleren Partikeldurchmesser von 0,3 bis 0,6 µm,
e) 0,15 bis 0,29 Massenprozent eines Härtungskatalysators,
f) 0,5 bis 1,5 Massenprozent eines feuchtigkeitsreaktiven silanmodifizierten Trockenmittels, sowie
g) 0,5 bis 1,5 Massenprozent eines feuchtigkeitsreaktiven silanmodifizierten Haftvermittlers,
wobei sich die Prozentangaben auf die Masse des verarbeitungsfertigen Parkettklebstoffes beziehen und die Summe der Bestandteile a) bis g) 82,15 % bis 100 % beträgt.

3. Wasser-, Lösemittel- und Weichmacher-freier Einkomponenten-Parkettklebstoff nach einem der vorhergehenden Ansprüche, **dadurch gekennzeichnet, dass** das Massenverhältnis von Bestandteil a) zu Bestandteil b) 2:1 bis 4:1 und das Massenverhältnis von Bestandteil c) zu Bestandteil d) 8:1 bis 18:1 beträgt.

4. Wasser-, Lösemittel- und Weichmacher-freier Einkomponenten-Parkettklebstoff nach einem der vorhergehenden Ansprüche, **dadurch gekennzeichnet, dass** die terminalen Silangruppen des silanterminierten Polyalkylenoxid-Bindemittels gemäß a) Dimethoxymethylsilangruppen sind, das polymere Grundgerüst Polypropylenoxid ist und das mittlere Molekulargewicht 10.000 g/mol beträgt.

5. Wasser-, Lösemittel- und Weichmacher-freier Einkomponenten-Parkettklebstoff nach einem der Ansprüche 1 bis 3, **dadurch gekennzeichnet, dass** die terminalen Silangruppen des silanterminierten Polyalkylenoxid-Bindemittels gemäß b) Dimethoxymethylsilangruppen sind, das polymere Grundgerüst Polypropylenoxid ist und das mittlere Molekulargewicht 1.000 g/mol beträgt.

6. Wasser-, Lösemittel- und Weichmacher-freier Einkomponenten-Parkettklebstoff nach einem der vorhergehenden Ansprüche, **dadurch gekennzeichnet, dass** das Marmorpulver gemäß c) einen mittleren Partikeldurchmesser von 2,0 µm und das Kreidepulver gemäß d) einen mittleren Partikeldurchmesser von 0,4 µm besitzt.

7. Wasser-, Lösemittel- und Weichmacher-freier Einkomponenten-Parkettklebstoff nach einem der vorhergehenden Ansprüche, **dadurch gekennzeichnet, dass** die Viskosität des verarbeitungsfertigen Klebstoffes, gemessen nach
DIN EN ISO 2555:2000-01 (20 Umdrehungen pro Minute), 91.200 ± 6.300 mPa·s beträgt.

8. Wasser-, Lösemittel- und Weichmacher-freier Einkomponenten-Parkettklebstoff nach einem der vorhergehenden Ansprüche, **dadurch gekennzeichnet, dass** die Scherfestigkeit auf Gussasphalt, gemessen nach DIN EN 14293:2006-10 (Lagerungsart A), 2,11 ± 0,22 N/mm² beträgt.

9. Verwendung des Wasser-, Lösemittel- und Weichmacher-freien Einkomponenten-Parkettklebstoffes auf Basis silanterminierter Polyalkylenoxid-Oligomerer nach einem der vorhergehenden Ansprüche zum Verkleben von Parkett, Holzbodenbelägen und/oder Holzwerkstoffplatten mit einem Untergrund.

10. Verwendung des Wasser-, Lösemittel- und Weichmacher-freien Einkomponenten-Parkettklebstoffes nach vorhergehendem Anspruch, **dadurch gekennzeichnet, dass** der Untergrund trocken oder feucht ist und aus Gussasphalt, Beton, Zement, Zementestrich, Zementfließestrich, Zementmörtel, zementgebundener Holzfaser, Keramik, Naturstein, Calciumsulfatestrich, Calciumsulfatfließestrich, Magnesitestrich, Holz, Holzwerkstoff, Sperrholz, Kork, Gips, Gipsfaser, Gipskarton, Hartfaser, Spachtelmasse, textilem faserartigem Material, polymerem Material, Grundierung und/oder oder einer Kombination dieser Untergründe besteht und das verklebte Parkett, die Holzbodenbeläge und/oder die Holzwerkstoffplatten mit Holzbodenoberflächenbehandlungsmittel behandelt oder unbehandelt sind und ganz oder teilweise aus europäischen Laub- und/oder Nadelholzarten, nichteuropäischen Holzarten oder einer Kombination dieser Holzarten bestehen.

## Claims

1. Water-, solvent- and plasticizer-free, one-component parquet adhesive which is based on silane-terminated polyalkylene oxide oligomers,
**characterised in that** it comprises no non-reactive liquid extenders and comprises the following materials or consists of them:
a) 12 to 36 per cent by mass of a moisture-reactive, silane-terminated polyalkylene oxide binding agent with an average molecular weight of 6,000 to 20,000 g/mol,
the silane functions being bonded via alkyl groups to the oligomeric skeletal structure,
b) 2 to 18 per cent by mass of a moisture-reactive, silane-terminated polyalkylene oxide binding agent with an average molecular weight of 300 to 3,000 g/mol,
the silane functions being bonded via alkyl groups to the oligomeric skeletal structure,
c) 30 to 60 per cent by mass of a surface-hydrophobised marble powder with an average particle diameter of 0.8 µm to 4.0 µm,
d) 2 to 10 per cent by mass of a surface-hydrophobised chalk powder with an average particle diameter of 0.2 to 0.7 µm,
e) 0.1 to 1.0 per cent by mass of a hardening catalyst,
f) 0.2 to 3 per cent by mass of a moisture-reactive, silane-modified drying agent, and also
g) 0.2 to 3 per cent by mass of a moisture-reactive, silane-modified adhesion promoter,
the percentage data relating to the mass of the ready-to-use parquet adhesive and the sum of the components a) to g) being 46.5% to 100%.

2. Water-, solvent- and plasticizer-free, one-component parquet adhesive according to claim 1, **characterised in that** it comprises no non-reactive liquid extenders and comprises the following materials or consists of them:
a) 23 to 33 per cent by mass of a moisture-reactive, silane-terminated polyalkylene oxide binding agent with an average molecular weight of 7,000 to 13,000 g/mol,
the silane functions being bonded via alkyl groups to the oligomeric skeletal structure,
b) 7 to 13 per cent by mass of a moisture-reactive, silane-terminated polyalkylene oxide binding agent with an average molecular weight of 700 to 1,300 g/mol,
the silane functions being bonded via alkyl groups to the oligomeric skeletal structure,
c) 48 to 60 per cent by mass of a surface-hydrophobised marble powder with an average particle diameter of 1.0 µm to 3.0 µm,
d) 3 to 7 per cent by mass of a surface-hydrophobised chalk powder with an average particle diameter of 0.3 to 0.6 lzm,
e) 0.15 to 0.29 per cent by mass of a hardening catalyst,
f) 0.5 to 1.5 per cent by mass of a moisture-reactive, silane-modified drying agent, and also
g) 0.5 to 1.5 per cent by mass of a moisture-reactive, silane-modified adhesion promoter,
the percentage data relating to the mass of the ready-to-use parquet adhesive and the sum of the components a) to g) being 82.15% to 100%.

3. Water-, solvent- and plasticizer-free, one-component parquet adhesive according to one of the preceding claims, **characterised in that** the mass ratio of component a) to component b) is 2 : 1 to 4 : 1 and the mass ratio of component c) to component d) is 8 : 1 to 18 : 1.

4. Water-, solvent- and plasticizer-free, one-component parquet adhesive according to one of the preceding claims, **characterised in that** the terminal silane groups of the silane-terminated polyalkylene oxide binding agent according to a) are dimethoxymethylsilane groups, the polymeric skeletal structure is polypropylene oxide and the average molecular weight is 10,000 g/mol.

5. Water-, solvent- and plasticizer-free, one-component parquet adhesive according to one of the claims 1 to 3, **characterised in that** the terminal silane groups of the silane-terminated polyalkylene oxide binding agent according to b) are dimethoxymethylsilane groups, the polymeric skeletal structure is polypropylene oxide and the average molecular weight is 1,000 g/mol.

6. Water-, solvent- and plasticizer-free, one-component parquet adhesive according to one of the preceding claims, **characterised in that** the marble powder according to c) has an average particle diameter of 2.0 µm, and the chalk powder according to d) has an average particle diameter of 0.4 µm.

7. Water-, solvent- and plasticizer-free, one-component parquet adhesive according to one of the preceding claims, **characterised in that** the viscosity of the ready-to-use adhesive, measured according to DIN EN ISO 2555:2000-01 (20 revolutions per minute), is 91,200 ± 6,300 mPa·s.

8. Water-, solvent- and plasticizer-free, one-component parquet adhesive according to one of the preceding claims, **characterised in that** the shear strength on mastic asphalt, measured according to DIN EN 14293:2006-10 (storage type A), is 2.11 ± 0.22 N/mm².

9. Use of the water-, solvent- and plasticizer-free, one-component parquet adhesive based on silane-terminated polyalkylene oxide oligomers according to one of the preceding claims for gluing parquet, wooden floor coverings and/or wood-based material boards to a sub-floor.

10. Use of the water-, solvent- and plasticizer-free, one-component parquet adhesive according to the preceding claim, **characterised in that** the sub-floor is dry or moist and consists of mastic asphalt, concrete, cement, cement screed, cement liquid screed, cement mortar, cement-bonded wood fibre, ceramic, natural stone, calcium sulphate screed, calcium sulphate liquid screed, magnesite screed, wood, wood-based material, plywood, cork, gypsum, gypsum fibre, gypsum plasterboard, hardboard, knifing filler, textile fibrous material, polymeric material, primer and/or a combination of these sub-floors and the glued parquet, the wooden floor coverings and/or the wood-based material boards are treated with treatment agents for wooden floor surfaces or untreated and consist totally or partially of European deciduous and/or coniferous types of timber, non-European types of timber or a combination of these types of timber.

## Revendications

1. Adhésif monocomposant pour parquet, sans eau, sans solvant et sans plastifiant, à base d'oligomères de poly(oxyde d'alkylène) à terminaison silane, **caractérisé en ce qu'**il ne contient pas de diluant liquide non réactif et contient les substances suivantes ou en est constitué :
a) 12 à 36 % en masse d'un liant de type poly(oxyde d'alkylène) à terminaison silane réactif vis-à-vis de l'humidité, ayant une masse moléculaire moyenne de 6 000 à 20 000 g/mol, les fonctions silane étant reliées par l'intermédiaire de groupes alkyle au squelette oligomère,
b) 2 à 18 % en masse d'un liant de type poly(oxyde d'alkylène) à terminaison silane, réactif vis-à-vis de l'humidité, ayant une masse moléculaire moyenne de 300 à 3 000 g/mol, les fonctions silane étant reliées par l'intermédiaire de groupes alkyle au squelette oligomère,
c) 30 à 60 % en masse d'une poudre de marbre hydrophobisée en surface, ayant une granulométrie moyenne de 0,8 µm à 4,0 µm,
d) 2 à 10 % en masse d'une poudre de craie hydrophobisée en surface, ayant une granulométrie moyenne de 0,2 à 0,7 µm,
e) 0,1 à 1,0 % en masse d'un catalyseur de durcissement,
f) 0,2 à 3 % en masse d'un agent déshydratant à modification silane, réactif vis-à-vis de l'humidité, ainsi que
g) 0,2 à 3 % en masse d'un promoteur d'adhérence à modification silane, réactif vis-à-vis de l'humidité,
les indications de pourcentage étant rapportées à la masse de l'adhésif pour parquet prêt à la mise en oeuvre, et la somme des constituants a) à g) étant de 46,5 % à 100 %.

2. Adhésif monocomposant pour parquet, sans eau, sans solvant et sans plastifiant selon la revendication 1, **caractérisé en ce qu'**il ne contient pas de diluant liquide non réactif, et contient les substances suivantes ou en est constitué :
a) 23 à 33 % en masse d'un liant de type poly(oxyde d'alkylène) à terminaison silane, réactif vis-à-vis de l'humidité, ayant une masse moléculaire moyenne de 7 000 à 13 000 g/mol, les fonctions silane étant reliées par l'intermédiaire des groupes alkyle au squelette oligomère,
b) 7 à 13 % en masse d'un liant de type poly(oxyde d'alkylène) à terminaison silane, réactif vis-à-vis de l'humidité, ayant une masse moléculaire moyenne de 700 à 1 300 g/mol, les fonctions silane étant reliées par l'intermédiaire de groupes alkyle au squelette oligomère,
c) 48 à 60 % en masse d'une poudre de marbre hydrophobisée en surface, ayant une granulométrie moyenne de 1,0 µm à 3,0 µm,
d) 3 à 7 % en masse d'une poudre de craie hydrophobisée en surface, ayant une granulométrie moyenne de 0,3 à 0,6 µm,
e) 0,15 à 0,29 % en masse d'un catalyseur de durcissement,
f) 0,5 à 1,5 % en masse d'un agent déshydratant à modification silane, réactif vis-à-vis de l'humidité, ainsi que
g) 0,5 à 1,5 % en masse d'un promoteur d'adhérence à modification silane, réactif vis-à-vis de l'humidité,
les indications de pourcentage étant rapportées à la masse de l'adhésif pour parquet prêt à la mise en oeuvre, et la somme des constituants a) à g) étant de 82,15 % à 100 %.

3. Adhésif monocomposant pour parquet, sans eau, sans solvant et sans plastifiant selon l'une des revendications précédentes, **caractérisé en ce que** le rapport en masse du constituant a) au constituant b) est de 2:1 à 4:1, et que le rapport en masse du constituant c) au constituant d) est de 8:1 à 18:1.

4. Adhésif monocomposant pour parquet, sans eau, sans solvant et sans plastifiant selon l'une des revendications précédentes, **caractérisé en ce que** les groupes silane terminaux du liant de type poly(oxyde d'alkylène) à terminaison silane selon a) sont des groupes diméthoxyméthylsilane, le squelette polymère est un poly(oxyde de propylène), et la masse moléculaire moyenne est de 10 000 g/mol.

5. Adhésif monocomposant pour parquet, sans eau, sans solvant et sans plastifiant selon l'une des revendications 1 à 3, **caractérisé en ce que** les groupes silane terminaux du liant de type poly(oxyde d'alkylène) à terminaison silane selon b) sont des groupes diméthoxyméthylsilane, le squelette polymère est un poly(oxyde de propylène), et la masse moléculaire moyenne est de 1 000 g/mol.

6. Adhésif monocomposant pour parquet, sans eau, sans solvant et sans plastifiant selon l'une des revendications précédentes, **caractérisé en ce que** la poudre de marbre selon c) présente une granulométrie moyenne de 2,0 µm, et la poudre de craie selon d) une granulométrie moyenne de 0,4 µm.

7. Adhésif monocomposant pour parquet, sans eau, sans solvant et sans plastifiant selon l'une des revendications précédentes, **caractérisé en ce que** la viscosité de l'adhésif prêt à la mise en oeuvre, mesurée selon DIN EN ISO 2555:2000-01 (20 tr/min), est de 91 200 ± 6 300 mPa.s.

8. Adhésif monocomposant pour parquet, sans eau, sans solvant et sans plastifiant selon l'une des revendications précédentes, **caractérisé en ce que** la résistance au cisaillement sur asphalte coulée, mesurée selon DIN EN 14293:2006-10 (type de stockage A) est de 2,11 ± 0,22 N/mm².

9. Utilisation de l'adhésif monocomposant pour parquet, sans eau, sans solvant et sans plastifiant, à base d'oligomères de type poly(oxyde d'alkylène) à terminaison silane selon l'une des revendications précédentes pour coller un parquet, des revêtements de sol en bois et/ou des plaques de matériau à base de bois à un substrat.

10. Utilisation de l'adhésif monocomposant pour parquet, sans eau, sans solvant et sans plastifiant selon la revendication précédente, **caractérisée en ce que** le substrat est sec ou humide, et est constitué d'asphalte coulée, de béton, de ciment, d'une chape de ciment, d'une chape flottante de ciment, de mortier de ciment, de fibres de bois liées au ciment, de céramique, de pierre naturelle, d'une chape en sulfate de calcium, d'une chape flottante en sulfate de calcium, d'une chape en magnésite, de bois, d'un matériau à base de bois, de contre-plaqué, de liège, de plâtre, de plâtre armé de fibres, de plaque de plâtre, de fibres dures, de mastic, d'un matériau textile fibreux, d'un matériau polymère, d'un primaire et/ou d'une combinaison de ces substrats, et le parquet collé, les revêtements de sol en bois et/ou les plaques en un matériau à base de bois sont traités ou non traités avec un agent de traitement de la surface d'un sol en bois, et sont en totalité ou en partie constitués d'espèces européennes de bois de feuillus et/ou de bois de conifères, d'espèces de bois non européennes, ou d'une combinaison de ces espèces de bois.
